# DEMANDE DE BREVET EUROPEEN

(11) **EP 3 979 109 A1**
(43) Date de publication de la demande: **06.04.2022**
(21) Numéro de dépôt: 20306147.8
(22) Date de dépôt: 02.10.2020
(51) Int. Cl.: G06F 21/41, H04L 29/06

(54) **PROCÉDÉ ET SYSTÈME D'AUTHENTIFICATION D'UN UTILISATEUR SUR UN APPAREIL UTILISATEUR**

(71) Demandeur: Evidian, 78340 Les Clayes Sous Bois (FR)
(72) Inventeur: GUIONNEAU, Christophe, 38000 Grenoble (FR)
(74) Mandataire: IPAZ

(57) **Abrégé**

L'invention concerne un procédé (100) d'authentification d'un utilisateur sur un appareil utilisateur, ledit procédé (100) comprenant une phase d'authentification (104) comprenant les étapes suivantes :
- affichage (106), dans une fenêtre d'un navigateur internet, d'une première page internet d'un serveur d'authentification auquel ledit appareil utilisateur est préalablement connecté au travers du réseau Internet ;
- initiation (108), au travers de ladite page internet, d'un processus d'authentification dudit utilisateur auprès d'au moins un serveur distant dudit appareil utilisateur ;
-lorsque ladite authentification est réussie, fourniture (110) par au moins un serveur distant, audit appareil utilisateur, d'au moins une donnée, dite preuve d'authentification, attestant d'une authentification réussie ; et
-ouverture (112) d'une session d'accès audit appareil utilisateur en utilisant ladite preuve d'authentification.

Elle concerne également un programme d'ordinateur et un système d'authentification mettant en œuvre un tel procédé.

## Description

La présente invention concerne un procédé d'authentification d'un utilisateur sur un appareil utilisateur. Elle concerne également un système mettant en œuvre un tel procédé.

Le domaine de l'invention est le domaine de l'authentification d'un utilisateur sur un appareil utilisateur, en particulier un appareil de traitement de données tel qu'un ordinateur, en vue d'autoriser ledit utilisateur à accéder audit appareil utilisateur.

### État de la technique

Les entreprises utilisent de plus en plus d'applications métiers accessibles de manière flexible, que ce soit au sein ou à l'extérieur du réseau de l'entreprise. L'accès à ces applications se fait généralement par un navigateur de l'entreprise, ou une application client, installé(e) sur l'appareil utilisateur et nécessite une authentification de l'utilisateur.

Pour ce faire, l'utilisateur doit tout d'abord ouvrir une session sur l'appareil utilisateur pour accéder à l'appareil utilisateur. Lorsque la session est ouverte et que l'utilisateur a accès à l'appareil, il lance un navigateur Internet ou l'application client. Une authentification est alors réalisée soit en fonction des informations fournies par l'utilisateur, soit en fonction de données d'identification récupérées de manière automatisée depuis un serveur de l'entreprise lorsque l'utilisateur se trouve au sein du réseau d'entreprise. Les données d'identification sont vérifiées et l'accès au service est autorisé ou non.

Différentes techniques d'authentification sont disponibles pour vérifier l'identité de l'utilisateur et ses droits d'accès en vue d'autoriser ou d'interdire l'accès à une application. Toutes ces techniques nécessitent que l'utilisateur ait accès à l'appareil utilisateur, également appelé poste de travail, et ne peuvent généralement pas être mises en œuvre tant que l'utilisateur n'a pas accédé au poste de travail.

L'accès au poste de travail, ou à l'appareil utilisateur, nécessite une authentification qui est gérée localement par le poste de travail, ou par un domaine d'authentification d'un réseau privé auquel appartient la poste de travail, tel qu'un réseau d'entreprise. L'authentification par un domaine d'authentification d'un réseau privé n'est possible que si le poste de travail se trouve dans le réseau privé en question. Ainsi, lorsque le poste de travail se trouve hors du réseau, l'accès audit poste de travail est entièrement géré en local dans le poste de travail, en utilisant un cache d'authentification locale.

Or, une telle technique d'authentification ne permet pas gérer de manière dynamique et flexible l'accès aux postes de travail, quels que soient leur emplacement. De plus, cette technique d'authentification peut être problématique sur le plan de la sécurité des postes de travail, en particulier en cas de vols d'identifiants ou des postes de travail.

Un but de la présente invention est de remédier à au moins un des inconvénients précités.

Un autre but de la présente invention est de proposer une technique d'authentification permettant de gérer de manière plus dynamique et plus flexible l'accès à un poste de travail quel que soit son emplacement.

Il est aussi un but de la présente invention de proposer une technique d'authentification permettant un accès plus sécurisé au poste de travail utilisateur quel que soit son emplacement.

### Exposé de l'invention

L'invention permet d'atteindre au moins l'un des buts précités par un procédé d'authentification d'un utilisateur sur un appareil utilisateur, ledit procédé comprenant une phase d'authentification comprenant les étapes suivantes :
- affichage, dans une fenêtre d'un navigateur Internet, d'une première page Internet d'un serveur d'authentification auquel ledit appareil utilisateur est préalablement connecté au travers du réseau Internet ;
- initiation, au travers de ladite première page Internet, d'un processus d'authentification dudit utilisateur auprès d'au moins un serveur distant dudit appareil utilisateur ;
- lorsque ladite authentification est réussie, fourniture par au moins un serveur distant, audit appareil utilisateur, d'au moins une donnée, dite preuve d'authentification, attestant d'une authentification réussie ; et
- ouverture d'une session d'accès audit appareil utilisateur en utilisant ladite preuve d'authentification.

Ainsi, le procédé selon l'invention propose de contrôler l'accès d'un utilisateur à un appareil utilisateur, par une authentification de cet utilisateur auprès d'un serveur, distant dudit appareil utilisateur, et connecté audit appareil utilisateur au travers d'une connexion Internet. Ainsi, il est possible de réaliser une authentification de l'utilisateur, avant même que celui-ci accède à l'appareil utilisateur, en vue d'accepter ou de refuser l'accès à l'appareil utilisateur pour cet utilisateur.

La présente invention permet une plus grande sécurité, ou du moins le même niveau de sécurité, lors de l'accès aux appareils utilisateur, dans le temps et dans l'espace, que l'appareil utilisateur se trouve ou non dans un domaine d'authentification.

De plus, selon la présente invention, l'accès à un appareil utilisateur est autorisé ou non par une authentification réalisée sur un serveur distant et indépendant de l'appareil utilisateur. Ainsi, un administrateur peut accéder et modifier, à la volée, les droits d'accès à tel ou tel appareil utilisateur, pout el ou tel utilisateur, sans aucune intervention sur le(s) appareil(s) utilisateur(s). Cela permet un contrôle plus facile, plus flexible, et plus dynamique de l'accès à un appareil utilisateur, et a fortiori à un parc d'appareils utilisateur.

Le processus d'authentification peut être de n'importe quel type.

Le processus d'authentification peut vérifier l'identité de l'utilisateur en fonction d'au moins une donnée d'identité fournie par l'appareil utilisateur au serveur d'authentification, la preuve d'authentification étant fournie en fonction de ladite identité.

Au moins une donnée d'identité peut comprendre un identifiant, un mot de passe, un mot de passe à usage unique, une donnée biométrique telle qu'une empreinte digitale, une donnée de visage, et/ou une donnée de rétine etc.

Au moins une donnée d'identification peut être entrée manuellement par l'utilisateur.

Au moins une donnée d'identification peut être lue depuis un support informatique relié à l'appareil utilisateur tel qu'une clef USB, une carte à puce, etc.

Au moins une donnée d'identification peut être déterminée par un capteur relié ou intégré à l'appareil utilisateur, tel qu'un lecteur d'empreinte digitale, une caméra, etc.

Le processus d'authentification peut vérifier au moins un droit d'accès applicable à l'utilisateur, la preuve d'authentification étant fournie en fonction dudit droit d'accès.

Dans ce cas, le processus d'authentification peut vérifier :
- d'une part, l'identité de l'utilisateur en fonction des données d'identité, et
- d'autre part, au moins un droit d'accès applicable à cet utilisateur ;
avant de délivrer la preuve d'authentification permettant à l'utilisateur d'avoir accès à cet appareil utilisateur.

Au moins un droit d'accès applicable à cet utilisateur peut être mémorisé sur le serveur d'authentification, ou sur un autre appareil ou serveur, accessible pour le serveur d'authentification, au travers du réseau Internet.

Au moins un droit d'accès peut être spécifique à l'utilisateur.

Au moins un droit d'accès peut être spécifique à l'appareil utilisateur.

Au moins un droit d'accès peut être fixe, ou variable en fonction d'une donnée horaire par exemple

La preuve d'authentification peut être tout type de preuve numérique, et peut comprendre tout type de données.

Avantageusement, la preuve d'authentification peut comprendre une donnée chiffrée, en particulier avec une clef privée associée à une clef publique mémorisée au niveau dudit appareil utilisateur. Dans ce cas, l'appareil utilisateur peut être configurée pour déchiffrer la donnée reçue avec la clef publique et utiliser cette donnée pour donner accès à l'appareil utilisateur pour l'utilisateur.

Alternativement ou en plus, la preuve d'authentification peut comprendre un jeton d'authentification.

Suivant un mode de réalisation, le jeton peut être à usage unique.

Le jeton peut avoir une validité ponctuelle de sorte que lorsqu'elle est utilisée une fois elle perd sa validité.

Le jeton peut avoir une validité pendant une durée prédéterminée. Dans ce cas, il peut être prévu de mettre fin l'accès à l'appareil utilisateur de cet utilisateur, dès que la validité du jeton se termine.

Suivant un autre mode de réalisation, le jeton peut être à usage multiple valable pour autoriser l'accès du même utilisateur au même appareil utilisateur à plusieurs reprises.

Suivant une caractéristique particulièrement avantageuse, la preuve d'authentification peut être utilisable pour réaliser, après accès audit appareil utilisateur, une authentification, dite fédérée, de l'utilisateur :
- auprès d'une application, dite externe, exécutée sur un serveur distant de l'appareil utilisateur et accessible, par ledit appareil utilisateur, au travers du réseau Internet ; et/ou
- auprès d'une application, dite interne, exécutée sur un serveur se trouvant dans un réseau ou un domaine d'authentification dans lequel se trouve ledit appareil utilisateur et accessible, par ledit appareil utilisateur, au travers dudit réseau.

Ainsi, pour un utilisateur donné, une même preuve d'authentification peut être utilisée pour d'une part autoriser l'accès à l'appareil utilisateur pour cet utilisateur, et d'autre part s'identifier auprès d'une ou de plusieurs applications accédées par cet utilisateur avec cet appareil utilisateur.

Généralement, l'accès à l'application externe est réalisé par un navigateur Internet en accédant à une URL d'un serveur sur lequel cette application est exécutée, ou par une application client exécutée sur l'appareil utilisateur et qui fonctionne en coopération avec une application serveur exécutée sur un serveur distant. Une telle application est généralement appelée une application SaaS pour « Software as a Service ».

De manière similaire, l'application interne est exécutée sur un serveur et est accédé par un navigateur Internet ou une application client. Dans ce cas, et à la différence de l'application externe, le serveur se trouve dans le même domaine que l'appareil utilisateur et l'accès à l'application client se fait sans sortir du réseau privé.

Avantageusement, le procédé selon l'invention peut comprendre, préalablement à la phase d'authentification, une étape de sélection d'un mode d'authentification parmi plusieurs modes de d'authentification. Dans ce cas, la phase d'authentification peut être fonction du mode d'authentification choisi.

Par exemple, le phase d'authentification peut être réalisée, ou ne pas être réalisée, en fonction du mode d'authentification choisi.

Alternativement, ou en plus, le processus d'authentification peut être fonction du mode d'authentification choisi. Par exemple, un premier processus d'authentification peut être initié lorsque l'utilisateur choisit un premier mode d'authentification, et un autre processus d'authentification peut être initié lorsque l'utilisateur choisit un autre mode d'authentification. Les processus d'authentification peuvent différer :
- dans leur mise en œuvre. Par exemple, un processus d'authentification peut être exécuté sur un unique serveur d'authentification, alors qu'un autre processus d'authentification peut nécessiter une authentification sur plusieurs serveurs ; et/ou
- dans le type d'authentification. Par exemple, un processus d'authentification peut mettre en œuvre une authentification simple vérifiant des données fixes préalablement mémorisées, telles qu'un identifiant et un mode de passe, alors qu'un autre processus d'authentification peut mettre en œuvre une authentification forte basée sur des données changeantes ; et/ou
- dans les canaux mis en œuvre pour l'authentification. Par exemple, un processus d'authentification peut demander les données d'identification au travers d'une page internet, alors qu'un autre processus d'authentification peut nécessiter une fourniture de données au travers d'une messagerie téléphonique ; et/ou
- dans la nature de la preuve d'authentification. Par exemple, un processus d'authentification peut fournir une preuve d'authentification à usage unique, alors qu'un autre processus d'authentification peut fournir une preuve d'authentification à usage multiple, ou permettant de mettre en œuvre une authentification fédérée, etc.

Ainsi, l'invention permet une plus grande flexibilité lors de l'authentification d'un utilisateur pour accéder à un appareil utilisateur et l'utilisateur dispose de plus de liberté sur le choix de tel ou tel mode d'authentification en fonction de l'usage qu'il souhaite faire de l'appareil utilisateur, et/ou des données d'identification dont il dispose.

Alternativement ou en plus, le procédé selon l'invention peut comprendre, lors de la phase d'authentification, une sélection dans la fenêtre de navigation Internet, d'un mode d'authentification parmi plusieurs modes d'authentification.

Cette sélection peut être réalisée auprès du serveur d'authentification, dans la première page affichée lors de l'étape d'affichage. Alternativement, cette sélection peut être réalisée dans une page internet d'un autre serveur, affichée ultérieurement.

Les modes d'authentification peuvent changer dans leur mise en œuvre, dans le type de l'authentification mise en œuvre, dans les canaux mis en œuvre pour l'authentification, ou encore dans la preuve d'authentification fournie, tel que décrit plus haut.

Suivant des exemples de réalisation, le processus d'authentification peut être réalisée :
- au travers de la première page Internet affichée : dans ce cas, cette première page internet est la seule page internet affichée dans la fenêtre du navigateur Internet pendant le processus d'authentification ; ou
- par une séquence de pages internet comprenant la première page internet et au moins une autre page internet affichée, en particulier de manière chainée, par ledit serveur d'authentification ou par un autre serveur d'authentification.

Dans ce deuxième cas, dans la séquence de pages internet, la page suivante peut n'être affichée qu'en cas d'opération réussie sur la page précédente.

Comme indiquée plus haut, l'authentification peut être de n'importe quel type.

En particulier, l'authentification peut être une authentification à facteurs multiples, permettant de réaliser une authentification forte.

Suivant des modes de réalisation, l'authentification peut être réalisée :
- exclusivement par le serveur d'authentification ;
- par le serveur d'authentification et au moins un autre serveur ;
- par un serveur autre que le serveur d'authentification.

Dans tous les cas, la preuve d'authentification peut être générée soit par le serveur d'authentification, soit par un autre serveur.

Dans tous les cas, la preuve d'authentification peut être transmise à l'appareil utilisateur par le serveur d'authentification ou par un autre serveur.

La phase d'authentification peut comprendre, une transmission, par l'appareil utilisateur vers le serveur d'authentification, d'au moins une donnée contextuelle relative à l'authentification, l'authentification prenant en compte ladite au moins une donnée contextuelle.

Ainsi, l'utilisateur peut être autorisé ou non à accéder à l'appareil utilisateur en fonction d'au moins une donnée contextuelle.

Par exemple, un administrateur peut interdire un accès à l'appareil utilisateur en dehors des heures de travail, ou pendant des périodes prédéterminées telles que le weekend ou la nuit. Dans ce cas, les données contextuelles transmises peuvent comprendre une donnée horaire ou une donnée de date. Suivant un autre exemple de réalisation, un administrateur peut interdire un accès à l'appareil utilisateur en dehors d'une zone géographique, tel que le pays de travail de l'utilisateur, de sorte que l'utilisateur ne peut accéder à l'appareil utilisateur lorsqu'il se trouve dans un autre pays. Dans ce cas, les données contextuelles transmises peuvent comprendre une donnée relative à la localisation géographique de l'appareil utilisateur.

De manière générale une donnée contextuelle peut être de tout type.

En particulier, la ou les données contextuelles peuvent comprendre une combinaison quelconque d'au moins une des données suivantes :
- au moins une donnée relative à l'appareil utilisateur, telle qu'un numéro de série, une caractéristique d'un système d'exploitation dudit appareil utilisateur,
- au moins une donnée relative à au moins une application exécutée, ou active, au niveau de l'appareil , telle que par exemple une application antivirus ;
- au moins une donnée relative à la position géographique de l'appareil utilisateur, et
- au moins une donnée relative au moment de la demande d'accès à l'appareil utilisateur,
- etc.

Avantageusement, l'adresse URL de la première page internet peut être préalablement mémorisée et le navigateur internet peut être configurée pour ouvrir uniquement ladite page Internet d'authentification lors de l'étape d'affichage.

En particulier, la fenêtre du navigateur Internet peut être configurée pour ne pas afficher de barre d'adresse de sorte que l'utilisateur ne peut pas saisir ou modifier l'adresse URL affichée.

Bien entendu, le procédé selon l'invention peut être utilisée lorsque l'appareil utilisateur ne se trouve pas dans un domaine d'authentification. Dans ce cas, l'étape d'ouverture d'une session réalise une ouverture d'une session locale permettant d'accéder à l'appareil utilisateur hors de tout domaine d'authentification.

Le procédé selon l'invention peut aussi être utilisée lorsque l'appareil utilisateur se trouve dans un domaine d'authentification. Dans ce cas, l'étape d'ouverture d'une session peut être utilisée pour réaliser une ouverture :
- d'une session locale, c'est-à-dire d'une session locale permettant d'accéder à l'appareil utilisateur hors dudit domaine d'authentification ; ou
- d'une session réseau dans ledit domaine d'authentification dans lequel se trouve ledit appareil utilisateur.

Dans ce cas, le choix du type de session peut être demandé à l'utilisateur avant la phase d'authentification, lors de l'étape d'ouverture d'une session.

Suivant un autre aspect de la présente invention, il est proposé un programme d'ordinateur comprenant des instructions, qui lorsqu'elles sont exécutées par au moins un appareil de traitement de données, mettent en œuvre toutes les étapes du procédé d'authentification selon l'invention.

Le programme d'ordinateur peut être codé dans tout langage informatique adéquat, par exemple en C, C++, JAVA, Python, etc.

Le programme d'ordinateur peut comprendre une partie, dite client, installée sur l'appareil utilisateur et une partie, dite serveur, installée sur au moins un serveur d'authentification.

Suivant un autre aspect de la présente invention, il est proposé un système d'authentification d'un utilisateur sur un appareil utilisateur comprenant :
- au moins un serveur d'authentification, et
- au moins un appareil utilisateur, distant dudit serveur d'authentification, et relié audit serveur d'authentification par une connexion internet ;
configurés pour mettre en œuvre toutes les étapes du procédé selon d'authentification selon l'invention.

En particulier, l'appareil utilisateur peut comprendre un agent d'authentification client, en particulier sous la forme d'une application, configuré pour mettre en œuvre toutes les étapes du procédé selon l'invention se déroulant au niveau de l'appareil utilisateur.

Cet agent d'authentification client peut être configuré pour lancer une fenêtre de navigation Internet dans laquelle est affichée la première page internet du serveur d'authentification.

Cet agent d'authentification client peut, préalablement à l'affichage de la première page Internet, être configuré pour établir une connexion internet au niveau de l'appareil Internet. Alternativement, la connexion internet de l'appareil utilisateur peut être gérée par une autre application ou processus, indépendamment de l'agent d'authentification. Dans ce cas, l'agent d'authentification client peut être configuré pour déclencher l'exécution de cette autre application, ou de cet autre processus, en vue de demander l'établissement d'une connexion internet.

L'agent d'authentification client peut être configuré pour recevoir la preuve d'authentification et ouvrir une session sur l'appareil utilisateur, directement ou par l'intermédiaire d'une autre application à laquelle ladite preuve d'authentification est fournie.

Lorsque la donnée d'authentification est valable pendant une durée prédéterminée, l'agent d'authentification client peut être configuré pour garder la session ouverte pendant cette durée et fermer la session lorsque ladite durée est écoulée, éventuellement après avoir prévenu l'utilisateur préalablement.

L'agent d'authentification client peut être configuré pour proposer plusieurs modes d'authentification et prendre en compte le mode d'authentification choisi par l'utilisateur.

En particulier, le serveur d'authentification peut comprendre un agent d'authentification serveur, en particulier sous la forme d'une application, configuré pour mettre en œuvre toutes les étapes du procédé selon l'invention se déroulant au niveau dudit serveur d'authentification.

Cet agent d'authentification serveur peut être configuré pour mettre en œuvre un processus d'authentification, seul ou en coopération avec au moins un autre serveur.

Cet agent d'authentification serveur peut être configuré pour recevoir :
- au moins une donnée d'identification, et
- optionnellement, au moins une donnée contextuelle ;
et mettre en œuvre au moins une vérification, en fonction desdites données, en vue de déterminer si l'utilisateur à le droit ou non d'accéder à l'appareil utilisateur, en vue de générer et fournir une preuve d'authentification, seul ou en coopération avec un autre appareil ou serveur.

L'appareil utilisateur peut être n'importe quel type d'appareil de traitement de données pouvant se connecter au réseau Internet, tel qu'un ordinateur, une tablette, un Smartphone, etc.

### Description des figures et modes de réalisation

D'autres avantages et caractéristiques apparaîtront à l'examen de la description détaillée d'un mode de réalisation nullement limitatif, et des dessins annexés sur lesquels :
- les FIGURES 1 à 4 sont des représentations schématiques d'exemples de réalisation non limitatifs d'un procédé d'authentification selon l'invention ; et
- la FIGURE 5 est une représentation schématique d'un exemple de réalisation non limitatif d'un système d'authentification selon l'invention.

Il est bien entendu que les modes de réalisation qui seront décrits dans la suite ne sont nullement limitatifs. On pourra notamment imaginer des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à de l'état de la technique antérieur. Cette sélection comprend au moins une caractéristique de préférence fonctionnelle sans détails structurels, ou avec seulement une partie des détails structurels si cette partie est uniquement suffisante pour conférer un avantage technique ou pour différencier l'invention par rapport à l'état de la technique antérieure.

Sur les figures, les éléments communs à plusieurs figures conservent la même référence.

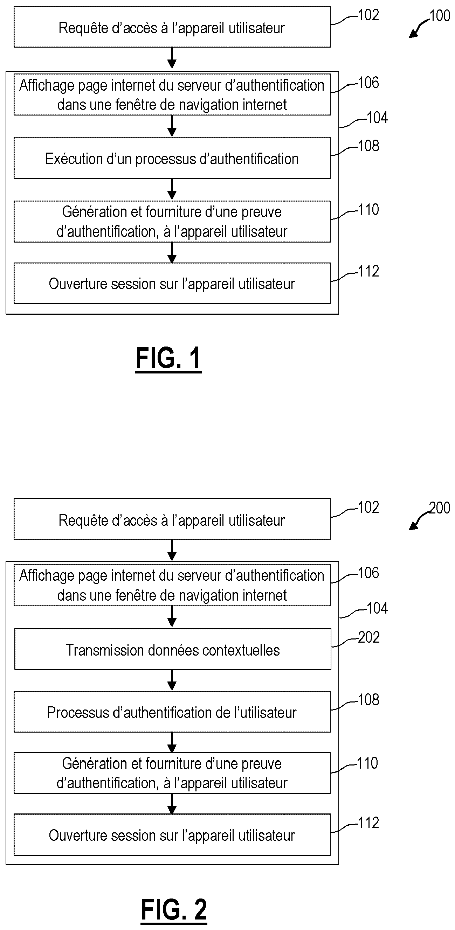

La FIGURE 1 est une représentation schématique d'un exemple de réalisation non limitatif d'un procédé d'authentification selon l'invention.

Le procédé 100, représenté sur la FIGURE 1, peut être mis en œuvre pour authentifier un utilisateur en vue d'autoriser ledit utilisateur à accéder à un appareil utilisateur.

Le procédé 100 peut être mis en œuvre pour ouvrir une session d'accès à l'appareil utilisateur, que ce dernier se trouve ou non dans un domaine d'authentification.

Le procédé 100 est réalisé lorsqu'un utilisateur émet une requête d'accès à l'appareil utilisateur, lors d'une étape 102. Une telle requête d'accès peut être une mise sous tension de l'appareil utilisateur, une sortie de veille de l'appareil utilisateur. Alternativement, la requête d'accès peut être formulée par lancement d'une application d'authentification, soit par appuie sur une ou plusieurs touches d'un clavier de l'appareil utilisateur soit par sélection d'une fonction dans une interface utilisateur affichée sur un écran de l'appareil utilisateur, grâce à pointeur par exemple.

En réponse à la requête d'accès, une phase d'authentification 104 est exécutée.

La phase d'authentification 104 comprend une étape 106 d'affichage, dans une fenêtre de navigation internet, d'une première page internet d'un serveur d'authentification, dont l'adresse URL est préenregistrée dans l'appareil utilisateur.

Le navigateur internet est préconfiguré pour ouvrir cette première page internet à l'étape 106 et la fenêtre du navigateur ne permet à l'utilisateur de saisir ou de modifier l'adresse URL affichée.

À partir de la première page internet du serveur d'authentification, un processus d'authentification est exécuté lors d'une étape 108. Le processus d'authentification peut être de tout type. Des exemples non limitatifs de processus d'authentification sont donnés plus bas. Le processus d'authentification peut être exécutée exclusivement sur le serveur d'authentification, ou peut faire appel à au moins un autre serveur. Le processus d'authentification peut être réalisé entièrement dans la première page internet affichée lors de l'étape 106, ou peut générer l'affichage d'au moins une autre page, du même serveur ou d'un autre serveur, en particulier de manière chainée.

Lorsque le processus d'authentification déclenché lors de l'étape 108 n'est pas réussie pour l'utilisateur, alors il est mis fin à la phase d'authentification 104.

Lorsque le processus d'authentification déclenché lors de l'étape 108 est réussie pour l'utilisateur, alors une preuve d'authentification est générée et fournie à l'appareil utilisateur, lors d'une étape 110. Cette preuve d'authentification peut être de tout type. Des exemples non limitatifs de preuves d'authentification sont donnés plus bas.

Lors d'une étape 112, la preuve d'authentification est utilisée dans l'appareil utilisateur, pour ouvrir une session utilisateur permettant audit utilisateur d'avoir accès à l'appareil utilisateur et de l'utiliser.

Il est à noter que les étapes 102-112 sont réalisées avant tout accès de l'utilisateur à l'appareil utilisateur et sont justement réalisées pour permettre à l'utilisateur d'accéder à l'appareil utilisateur.

La FIGURE 2 est une représentation schématique d'un autre exemple de réalisation non limitatif d'un procédé d'authentification selon l'invention.

Le procédé 200, de la FIGURE 2, comprend toutes les étapes du procédé 100 de la FIGURE 1.

Le procédé 200 comprend en outre, lors de la phase d'authentification 104, une étape 202 de transmission par l'appareil utilisateur vers le serveur d'authentification, ou vers un autre serveur intervenant lors du processus d'authentification, d'au moins une donnée contextuelle qui sera utilisée lors du processus d'authentification, en vue d'accepter ou de refuser l'accès à l'appareil utilisateur pour cet utilisateur. Autrement dit, l'authentification, c'est-à-dire l'autorisation ou non d'accès à l'appareil utilisateur, pour cet utilisateur sera fonction d'au moins une donnée contextuelle.

La ou les données contextuelles peu(ven)t comprendre une combinaison quelconque d'au moins une des données suivantes :
- au moins une donnée relative à l'appareil utilisateur, telle qu'un numéro de série, une caractéristique d'un système d'exploitation dudit appareil utilisateur ;.
- au moins une donnée relative à au moins une application actuellement exécutée, ou active, au niveau de l'appareil, telle que par exemple une application antivirus active dans l'appareil utilisateur ;
- au moins une donnée relative à la position géographique de l'appareil utilisateur ;
- au moins une donnée relative au moment de la demande d'accès à l'appareil utilisateur ;
- etc.

Par exemple, le processus d'authentification peut être configuré pour accepter ou refuser l'accès à l'appareil utilisateur, lorsque l'heure d'accès est trop tardive ou lorsque le lieux d'accès se trouve dans une zone inhabituelle, etc. Pour ce faire, le processus d'authentification peut consulter un registre de droits prédéfinis pour cet utilisateur et mémorisé sur le serveur d'authentification ou sur un autre serveur accessible audit serveur d'authentification au travers d'un réseau de communication tel qu'Internet.

De manière générale, le processus d'authentification peut consulter au moins un droit d'accès applicable pour cet utilisateur et pour cet appareil utilisateur. Cet au moins un droit d'accès peut être mémorisé au niveau du serveur d'authentification ou d'un autre appareil ou serveur, accessible au travers du réseau Internet.

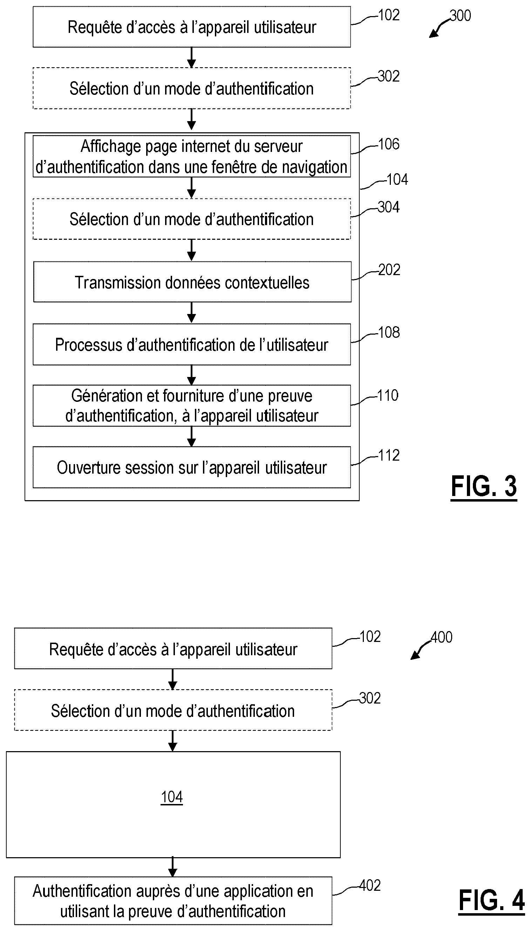

La FIGURE 3 est une représentation schématique d'un autre exemple de réalisation non limitatif d'un procédé d'authentification selon l'invention.

Le procédé 300, de la FIGURE 3, comprend toutes les étapes du procédé 200 de la FIGURE 2.

De plus, le procédé 300 peut comprendre en plus, avant la phase d'authentification 104, une étape 302 de sélection au niveau de l'appareil utilisateur d'un mode d'authentification, parmi plus plusieurs modes d'authentification. De manière générale, l'appareil utilisateur peut proposer, au travers d'une interface utilisateur plusieurs modes d'authentification, tel que par exemple une authentification faible par identifiant et mot de passe, ou une authentification forte par fourniture d'une donnée à usage unique par exemple. L'utilisateur peut choisir le mode d'authentification souhaité et valider ce choix, par exemple par sélection dans une liste déroulante ou par sélection d'un bouton associé au mode d'authentification souhaité.

Le mode d'authentification choisi par l'utilisateur peut influer sur l'exécution ou non de la phase d'authentification 104.

Le mode d'authentification choisi par l'utilisateur peut influer sur le contenu de la phase d'authentification, tel que par exemple sur le serveur d'authentification, et/ou sur le processus d'authentification, qui sera(seront) utilisé(s) lors de la phase d'authentification.

Le mode d'authentification choisi par l'utilisateur peut aussi influer la nature de la preuve d'authentification. Ainsi, en fonction du mode d'authentification choisi, la preuve d'authentification peut être à usage unique ou à usage multiple, à validité limitée dans le temps ou non, ou encore utilisable pour une authentification fédérée ou non, etc.

Alternativement ou en plus, le procédé 300 peut comprendre, lors de la phase d'authentification 104 et après l'étape 106 d'affichage de la page internet, une étape 304 de sélection, au niveau du serveur d'authentification, d'un mode d'authentification parmi plus plusieurs modes d'authentification.

De manière générale, la première page internet affichée lors de l'étape 106 peut proposer plusieurs modes d'authentification. L'utilisateur peut choisir le mode d'authentification souhaité et valider ce choix, par exemple par sélection dans une liste déroulante ou par sélection d'un bouton associé au mode d'authentification souhaité.

Le mode d'authentification choisi par l'utilisateur peut influer sur le processus d'authentification qui sera mise en œuvre lors de l'étape 108, tel que par exemple sur l'identité du serveur d'authentification, sur la nature des données d'identification à fournir, sur la nature de la preuve d'authentification, etc.

Bien entendu, l'étape 302, et/ou l'étape 304, de sélection d'un mode d'authentification peu(ven)t être mise(s) en œuvre dans le procédé 100 de la FIGURE 1, sans l'étape 202 de transmission de données contextuelles.

La FIGURE 4 est une représentation schématique d'un autre exemple de réalisation non limitatif d'un procédé d'authentification selon l'invention.

Le procédé 400, de la FIGURE 4, comprend toutes les étapes du procédé 300 de la FIGURE 3.

De plus, le procédé 400 comprend, suite à la phase d'authentification 104 ayant abouti à l'ouverture d'une session d'accès sur l'appareil utilisateur, une étape d'authentification de l'utilisateur pour accéder à :
- au moins une application installée localement, ou
- au moins une application installée sur un serveur distant accessible au travers d'un réseau de communication tel que le réseau Internet, et en particulier auprès d'une application SaaS ;
avec la preuve d'authentification obtenue lors de la phase d'authentification.

Ainsi, la preuve d'authentification obtenue lors de la phase d'authentification permet de réaliser une authentification fédérée de l'utilisateur :
- pour accéder à l'appareil utilisateur, et
- pour accéder à au moins une application au travers de l'appareil utilisateur.

Bien entendu, l'étape 402 d'authentification auprès d'une application peut être mise(s) en œuvre dans le procédé 100 de la FIGURE 1, ou dans le procédé 200 de la FIGURE 2, qui ne mettent pas en œuvre l'étape 302 et l'étape 304, de sélection d'un mode d'authentification.

Dans tous les exemples décrits ci-dessus en référence aux FIGURES 1-4, la preuve d'authentification peut être tout type de preuve numérique, et peut comprendre tout type de données, tel que par exemple :
- une donnée chiffrée, en particulier avec une clef privée associée à une clef publique mémorisée au niveau de l'appareil utilisateur : dans ce cas, l'appareil utilisateur est configuré pour déchiffrer la donnée reçue avec la clef publique et utiliser cette donnée pour donner accès à l'appareil utilisateur pour l'utilisateur ;
- un jeton d'authentification, en particulier à usage unique.
- un jeton d'authentification à validité ponctuelle de sorte que lorsqu'elle est utilisée une fois elle perd sa validité ;
- un jeton d'authentification à validité permanente ;
- un jeton d'authentification à validité limitée à une durée prédéterminée. Dans ce cas, il peut être prévu de mettre fin l'accès à l'appareil utilisateur de cet utilisateur, dès que la validité du jeton se termine ;
- un jeton d'authentification à usage multiple valable pour autoriser l'accès du même utilisateur au même appareil utilisateur à plusieurs reprises ;
- etc.

Dans tous les exemples décrits ci-dessus en référence aux FIGURES 1-4, le processus d'authentification peut être de n'importe quel type, et peut réaliser une authentification simple facteur (authentification faible) ou une authentification multifacteurs (authentification forte).

Le processus d'authentification peut vérifier l'identité de l'utilisateur en fonction d'au moins une donnée d'identité fournie, telle que par exemple un identifiant, un mot de passe, un mot de passe à usage unique, une donnée biométrique telle qu'une empreinte digitale, une donnée de visage, une donnée de rétine etc.

Le processus d'authentification peut, suivant une option avantageuse, vérifier au moins un droit d'accès applicable à l'utilisateur, mémorisé sur le serveur d'authentification, ou sur un autre appareil ou serveur accessible pour le serveur d'authentification au travers du réseau Internet par exemple.

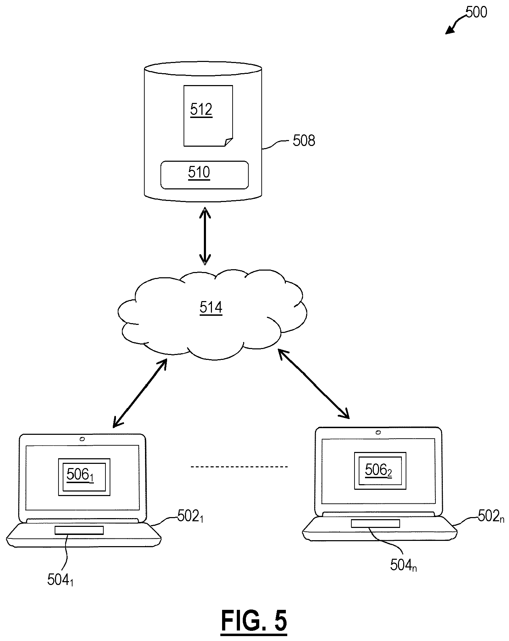

La FIGURE 5 est une représentation schématique d'un exemple de réalisation non limitatif d'un système d'authentification selon l'invention.

Le système 500 de la FIGURE 5 peut mettre en œuvre un procédé d'authentification selon l'invention, et en particulier l'un quelconque des procédés 100, 200, 300 ou 400 des FIGURES 1-5.

Le système 500 comprend au moins un appareil utilisateur 502. Dans l'exemple représenté, le système comprend une pluralité d'appareils utilisateurs 502₁-502ₙ. Chaque appareil utilisateur 502ᵢ peut être n'importe quel type d'appareil de traitement de données pouvant se connecter au réseau Internet, tel qu'un ordinateur, une tablette, un Smartphone, etc.

Chaque appareil utilisateur 502₁-502ₙ comprend un agent d'authentification 504₁-504ₙ, dit agent d'authentification client, configuré pour mettre en œuvre les étapes du procédé selon l'invention qui sont exécutées au niveau de l'appareil utilisateur. En particulier, l'agent d'authentification client 504ᵢ est configuré pour lancer une fenêtre de navigation internet, respectivement 506ᵢ-506ₙ, au niveau de l'appareil utilisateur, respectivement 502₁-502ₙ, en vue de réaliser une authentification d'un utilisateur sur ledit appareil utilisateur 502₁-502ₙ, pour autoriser ou non l'accès dudit utilisateur audit appareil utilisateur 502₁-502ₙ.

De manière générale, l'agent d'authentification client 504ᵢ peut être configuré pour réaliser en outre au moins une des opérations/étapes décrites plus haut en relation avec l'agent d'authentification client 504ᵢ, ou l'appareil utilisateur 502ᵢ.

Le système 500 comprend en outre un ou plusieurs serveurs d'authentification.

Dans l'exemple représenté, le système 500 comprend un unique serveur d'authentification 508. Le serveur d'authentification 508 comprend un agent d'authentification 510, dit agent d'authentification serveur, configuré pour mettre en œuvre les étapes du procédé selon l'invention qui sont exécutées au niveau du serveur d'authentification 508.

De manière générale, l'agent d'authentification serveur 510 peut être configuré pour réaliser en outre au moins une des opérations/étapes décrites plus haut en relation avec l'agent d'authentification serveur, ou le serveur d'authentification.

Le serveur d'authentification 508 peut en outre comprendre une ou plusieurs bases de données 512 mémorisant des données d'identification, et optionnellement des droits d'accès.

Chaque appareil utilisateur 502₁-502ₙ peut communiquer avec le serveur d'authentification 508 au travers du réseau Internet 514.

Nous allons maintenant décrire un exemple de mise en œuvre non limitatif de l'authentification d'un utilisateur en vue de l'autoriser ou non à accéder à un appareil utilisateur, c'est-à-dire en vue de l'autoriser ou non à ouvrir une session sur un appareil utilisateur, dans le cas particulier d'un utilisateur souhaitant accéder à un poste de travail d'une entreprise.

Un utilisateur (U) depuis un appareil utilisateur, également appelé poste de travail (Pu), tente d'ouvrir une session sur ledit poste (Pu). Le poste de travail (Pu) peut être connecté au réseau de l'entreprise. Le poste de travail (Pu) peut ne pas être sur le réseau de l'entreprise mais connecté à Internet depuis n'importe quel point d'accès.

L'utilisateur (U) sélectionne un agent d'authentification client, également appelé tuile d'authentification de l'entreprise (TAe). Cette tuile peut être la tuile par défaut et éventuellement la seule tuile d'authentification disponible et configurée sur le poste (Pu).

La sélection de la tuile lance une fenêtre d'un navigateur Web minimaliste, une simple fenêtre sans menu, sans barre de navigation, sans bookmarks, sans décoration (communément appelée WebView).

Lors de l'ouverture de la WebView, la tuile d'authentification TAe peut transmettre à la WebView des informations techniques sur le poste de travail, comme par exemple la présence et l'activation de l'antivirus, le numéro de série ou l'identification du poste de travail Pu, le niveau de version du système d'exploitation, la position géographique si des données GPS sont connues, le niveau des mises à jour des patchs de sécurité ou toutes autres informations techniques pouvant influer sur le contexte d'authentification et sur la sécurité d'usage du poste de travail Pu.

La WebView ouvre automatiquement la seule URL configurée, celle d'un serveur d'authentification, également appelé Identity Provider (IdP) de l'entreprise. L'utilisateur U ne dispose d'aucun moyen pour ouvrir une autre URL que celle configurée initialement par l'administrateur Adm de la sécurité des postes de travail de l'entreprise Pu.

La première page Web de l'IdP s'affiche dans la WebView. Cette page peut être configurée pour demander :
- soit uniquement l'identité de l'utilisateur (U) : son identifiant, son adresse mail, ou toutes autres informations permettant d'identifier de manière unique l'utilisateur, avant de proposer une ou plusieurs méthodes d'authentification associée à l'utilisateur ;
- soit un identifiant et un mot de passe ou un secret associé à l'utilisateur (U) ;
- soit proposer une liste de méthode d'authentification. Certaines de ces méthodes peuvent nécessiter de saisir des mots de passe à usage unique (OTP) ou d'utiliser des clés de sécurité (FIDO), d'autres peuvent enchainer plusieurs méthodes (multi-facteurs chainés) ou rediriger vers un autre IdP ou serveur d'authentification proposant lui aussi ses propres méthodes d'authentification.

Le serveur d'authentification IdP enchaine autant de pages que nécessaires en fonction de ses critères d'authentification résultant de l'analyse du contexte d'authentification de l'utilisateur (géolocalisation, adresse IP, plage horaire, contexte technique de son poste de travail (Pu), comportement de l'utilisateur, etc..). Le serveur d'authentification IdP peut ainsi réaliser une authentification faible, une authentification forte (multi-facteurs), ou refuser l'authentification, en fonction de l'analyse contextuelle et dynamique.

Si l'utilisateur n'arrive pas à s'authentifier, la WebView ne transmet aucune preuve d'authentification à la tuile d'authentification TAe, ou transmet une donnée attestant d'une authentification refusée. L'accès au poste de travail Pu est refusé.

Si l'utilisateur est authentifié avec succès auprès de l'IdP alors une preuve d'authentification PA est transmise par l'IdP, au travers de la WebView, à la tuile d'authentification TAe.

La tuile d'authentification TAe vérifie la preuve d'authentification PA. Cette preuve peut être sous plusieurs formes, à savoir :
- une donnée chiffrée avec une clé privée de l'IdP et qui est déchiffrée avec une clé publique connue par la tuile TAe : cette clé peut être configurée dans les paramètres de la tuile. Les données peuvent alors contenir de multiples informations sur l'utilisateur : son identifiant, son nom/prénom, son adresse mail, etc...
- un jeton, par exemple un "Bearer token OAuth", ce jeton doit alors être vérifié auprès de l'IdP pour obtenir les informations de l'utilisateur. Ce jeton peut être utilisé régulièrement pour vérifier que l'utilisateur a toujours des droits d'accès et donc réaliser une authentification continue de l'utilisateur sur le poste de travail TAe tout au long de sa session. Le jeton peut aussi être utilisé pour accéder à d'autre applications (SaaS) au travers de la fédération d'identité fourni par l'IdP et donc il sera possible de réaliser des fonctions de Single-Sign On (SSO; authentification unique) sur plusieurs, voire toutes les, applications utilisées par l'entreprise, en mode SaaS ou dans le système d'information de l'entreprise.

Une fois la preuve PA vérifiée avec succès, par exemple selon l'une des méthodes décrites ci-dessus à titre d'exemples non limitatifs, la session est ouverte pour l'utilisateur U sur le poste de travail Pu.

L'utilisateur a accès aux données du poste de travail. Il peut accéder aux applications SaaS de l'entreprise ou aux applications internes. Lors de l'accès à des applications Web ou SaaS, elles peuvent faire appel au même IdP de l'entreprise pour identifier et authentifier l'utilisateur, en utilisant les mêmes protocoles et mécanismes Web que pour l'authentification réalisée lors de l'accès au poste de travail.

Tout au long de la session ouverte pour l'utilisateur U sur le poste de travail Pu, un processus de fond de tâche peut réaliser périodiquement une vérification du jeton obtenu et contrôler que l'utilisateur U est toujours autorisé à accéder au poste de travail Pu.

Bien entendu, ces exemples sont donnés à titre d'exemples particuliers uniquement et l'invention n'est pas limitée aux exemples détaillés ci-dessus. De nombreuses variantes peuvent être imaginées aux exemples donnés ci-dessus sans sortir du cadre de l'invention telle que définie dans les revendications principales.

## Revendications

1. Procédé (100;200;300;400) d'authentification d'un utilisateur sur un appareil utilisateur (502₁-502ₙ), ledit procédé (100;200;300;400) comprenant une phase d'authentification (104) comprenant les étapes suivantes :
- affichage (106), dans une fenêtre (506₁-506ₙ) d'un navigateur internet, d'une première page internet d'un serveur d'authentification (508) auquel ledit appareil utilisateur (502₁-502ₙ) est préalablement connecté au travers du réseau Internet (514) ;
- initiation (108), au travers de ladite première page internet, d'un processus d'authentification dudit utilisateur auprès d'au moins un serveur distant (508) dudit appareil utilisateur (502₁-502ₙ) ;
- lorsque ladite authentification est réussie, fourniture (110) par au moins un serveur distant (508), audit appareil utilisateur (502₁-502ₙ), d'au moins une donnée, dite preuve d'authentification, attestant d'une authentification réussie ; et
- ouverture (112) d'une session d'accès audit appareil utilisateur (502₁-502ₙ) en utilisant ladite preuve d'authentification.

2. Procédé (100;200;300;400) selon la revendication précédente, **caractérisé en ce que** le processus d'authentification vérifie l'identité de l'utilisateur en fonction d'au moins une donnée d'identité fournie par l'appareil utilisateur (502₁-502ₙ) au serveur d'authentification (508), la preuve d'authentification étant fournie en fonction de ladite identité.

3. Procédé (100;200;300;400) selon l'une quelconque des revendications précédentes, **caractérisé en ce que** le processus d'authentification vérifie au moins un droit d'accès applicable à l'utilisateur, la preuve d'authentification étant fournie en fonction dudit droit d'accès.

4. Procédé (100;200;300;400) selon la revendication précédente, **caractérisé en ce que** la preuve d'authentification comprend :
- une donnée chiffrée, en particulier avec une clef privée associée à une clef publique mémorisée au niveau dudit appareil utilisateur (502₁-502ₙ) ; et/ou
- un jeton d'authentification, en particulier à usage unique ou à usage multiple.

5. Procédé (100;200;300;400) selon l'une quelconque des revendications précédentes, **caractérisé en ce que** la preuve d'authentification est utilisable pour réaliser, après accès audit appareil utilisateur (502₁-502ₙ), une authentification, dite fédérée, de l'utilisateur :
- auprès d'une application, dite externe, exécutée sur un serveur distant de l'appareil utilisateur (502₁-502ₙ) et accessible, par ledit appareil utilisateur (502₁-502ₙ), au travers du réseau Internet ; et/ou
- auprès d'une application, dite interne, exécutée sur un serveur se trouvant dans un réseau ou un domaine d'authentification dans lequel se trouve ledit appareil utilisateur (502₁-502ₙ) et accessible, par ledit appareil utilisateur (502₁-502ₙ) au travers dudit réseau.

6. Procédé (300;400) selon l'une quelconque des revendications précédentes, **caractérisé en ce qu'**il comprend, préalablement à la phase d'authentification (104), une étape (302) de sélection d'un mode d'authentification parmi plusieurs modes de d'authentification, ladite phase d'authentification (104) étant fonction du mode d'authentification choisi.

7. Procédé (300;400)selon l'une quelconque des revendications précédentes, **caractérisé en ce qu'**il comprend, lors de la phase d'authentification (104), une sélection (304) dans la fenêtre de navigation Internet (506₁-506ₙ), d'un mode d'authentification parmi plusieurs modes d'authentification.

8. Procédé (100;200;300;400) selon l'une quelconque des revendications précédentes, **caractérisé en ce que** le processus d'authentification est réalisée :
- au travers de la première page Internet affichée, ou
- par une séquence de pages internet comprenant la première page internet et au moins une autre page internet affichée, en particulier de manière chainée, par ledit serveur d'authentification (508) ou par un autre serveur d'authentification.

9. Procédé (100;200;300;400) selon l'une quelconque des revendications précédentes, **caractérisé en ce que** le processus d'authentification est réalisée :
- exclusivement par le serveur d'authentification (508) ;
- par le serveur d'authentification (508) et au moins un autre serveur ;
- par un serveur autre que le serveur d'authentification (508).

10. Procédé (200;300;400) selon l'une quelconque des revendications précédentes, **caractérisé en ce que** la phase d'authentification (104) comprend une transmission (202), par l'appareil utilisateur (506₁-506ₙ) vers le serveur d'authentification (508), d'au moins une donnée contextuelle relative à l'authentification, l'authentification prenant en compte ladite au moins une donnée contextuelle.

11. Procédé (100;200;300;400) selon l'une quelconque des revendications précédentes, **caractérisé en ce que** l'adresse URL de la première page internet est préalablement mémorisée et le navigateur internet est configurée pour ouvrir uniquement ladite page Internet d'authentification lors de l'étape d'affichage (106).

12. Procédé (100;200;300;400) selon l'une quelconque des revendications précédentes, **caractérisé en ce que** l'étape (112) d'ouverture d'une session réalise une ouverture :
- d'une session locale sur l'appareil utilisateur (506₁-506ₙ), ou
- d'une session réseau dans un domaine, ou un réseau, dans lequel se trouve l'appareil utilisateur (506₁-506ₙ).

13. Programme d'ordinateur comprenant des instructions, qui lorsqu'elles sont exécutées par au moins un appareil de traitement de données, mettent en œuvre toutes les étapes du procédé (100;200;300;400) selon l'une quelconque des revendications précédentes.

14. Système (500) d'authentification d'un utilisateur sur un appareil utilisateur (506₁-506ₙ) comprenant :
- au moins un serveur d'authentification (508),
- au moins un appareil utilisateur (506₁-506ₙ), distant dudit serveur d'authentification (508), et relié audit serveur d'authentification (508) par une connexion Internet (514) ;
configurés pour mettre en œuvre toutes les étapes du procédé (100;200;300;400) selon l'une quelconque des revendications 1 à 12.
